# EUROPEAN PATENT SPECIFICATION

(11) **EP 3 873 772 B1**
(45) Date of publication and mention of the grant of the patent: **09.04.2025**
(21) Application number: 19802093.5
(22) Date of filing: 30.10.2019
(51) Int. Cl.: B60L 58/12, B60L 58/20, B60L 1/00, B60L 3/00, B60L 50/13

(54) **DEVICE FOR POWERING AND CONTROLLING AN ELECTRIC VEHICLE**
EINRICHTUNG ZUR LEISTUNGSVERSORGUNG UND STEUERUNG EINES ELEKTRISCHEN FAHRZEUGS
DISPOSITIF D'ALIMENTATION ÉLECTRIQUE ET DE CONTRÔLD'UN VÉHICULE ÉLECTRIQUE

(30) Priority: 31.10.2018 IT 201800009968
(43) Date of publication of application: 08.09.2021
(73) Proprietor: Piaggio & C. S.P.A., 56025 Pontedera Pisa (IT)
(72) Inventor: CARMIGNANI, Luca, 56025 Pontedera (PI) (IT); CANTINI, Jury, 56025 Pontedera (PI) (IT)
(74) Representative: Savi, Massimiliano
(86) International application number: PCT/EP2019/079686
(87) International publication number: WO 2020/089305

(56) References cited:
- EP-A1- 1 595 748
- EP-A1- 3 006 244
- EP-A2- 1 137 150
- EP-A2- 2 587 618
- WO-A1-2012/060766
- WO-A1-2013/141808
- WO-A1-2014/025069
- DE-A1- 102007 052 750
- JP-B2- 3 687 409
- US-A1- 2015 298 631

## Description

The present invention concerns a device for powering and controlling an electric vehicle, in particular an electric driven motorcycle, with improved reliability characteristics.

The following description will refer mainly to an electric motorcycle or moped without wishing to limit the field of application. Furthermore, in the following description the terms motorcycle and moped should be considered equivalent.

The use of electric motors is known both in motorcycles of hybrid type, in which one or more internal combustion engines are assisted by one or more electric motors, and in fully electric motorcycles, driven exclusively by the electric motor.

In some typical embodiments of known type, an electric motorcycle advantageously includes a high voltage main battery that provides the energy for driving the electric motor and a low voltage service battery that provides energy to many electric and electronic equipment of the motorcycle. In solutions of this type, a DC-DC converter is furthermore normally provided to convert the high voltage current generated by the main battery into a low voltage current to power the low voltage service battery.

One of the functions performed by the service battery is to provide energy to the system in the starting phase of the motorcycle. In practice, in the starting phase, the user, by means of a switch (typically operated by the vehicle ignition key or push-button), connects the service battery to the VCU (Vehicle Control Unit). The latter, in turn, through a BMS (Battery Management System), activates the main battery, enabling it to drive the traction motor and maintain the service battery charged through the DC-DC converter.

This solution, although it performs the task of managing powering of the electric traction motor and of the various electronic and electric devices of the motorcycle in an optimal manner, nevertheless has some drawbacks. Among these, the drawback that occurs when the service battery is flat or faulty is particularly serious for the user. In this case, in fact, in the absence of the initial energy from the VCU provided by the service battery, the motorcycle cannot be started, even though the high voltage main battery is sufficiently charged.

To solve this problem, different solutions have been proposed. EP 1595748 and DE 102007052750, for example, both disclose a device for powering and controlling an electric vehicle is disclosed. These solutions, however, have various drawbacks due above all to the complexity of the circuits used to guarantee starting of the vehicle and/or to the systems proposed not being fully reliable.

WO 2013/141808 discloses a device and a method for emergency start of a vehicle wherein the control means provided for recharging the battery are supplied by an external voltage source. WO 2012/060766 and EP1137150A2 each disclose an activation device and an activation method for a dual battery system.

It would therefore be desirable to have an electric vehicle, and in particular an electric motorcycle, with improved characteristics, able to overcome the problems of the vehicles of known type deriving from the impossibility of starting the vehicle in conditions in which the service battery is not sufficiently charged for the purpose.

A device for powering and controlling an electrical vehicle is known from EP2587618. US 2015/298631 discloses an electrical vehicle comprising rechargeable batteries.

One object of the present invention is therefore to provide a device for powering and controlling an electric vehicle, and in particular an electric motorcycle, which makes it possible to start the vehicle also when the service battery is not sufficiently charged.

A further object is to make it possible to start the vehicle also when the service battery is not sufficiently charged and, once the vehicle has been started, to allow recharging of the service battery.

A further object of the present invention is to provide a device for powering and controlling an electric vehicle which is provided with emergency starting means in the event of the service battery not being sufficiently charged to allow starting of the vehicle.

A further object of the present invention is to provide a device for powering and controlling an electric vehicle which can be manufactured with relatively simple circuit means.

A further object of the present invention is to provide a device for powering and controlling an electric vehicle which is easy to manufacture at competitive costs.

The above-mentioned and further objects and advantages of the present invention, as will be illustrated in the following part of the description, are achieved by means of an electric motorbike which comprises an electric traction motor and a control system of the motorbike and of the electric traction motor. Said electric motorbike further comprises a powering and controlling device that includes a first main battery for supplying the electric traction motor and said control system, a second service battery adapted to supply said control system during a starting phase of said motorbike, first starting means of the vehicle and second emergency starting means of the motorbike. According to the present invention, said control system comprises a first control unit of the vehicle and of the electric traction motor and a second control unit of said first main battery; said first starting means are operatively connected to said second service battery and to said first control unit of the motorbike and the electric traction motor to supply said first control unit by means of said second service battery under normal conditions; said second motorbike emergency starting means are operatively connected to said second control unit to power said first control unit by means of said first main battery in emergency starting conditions.

Said emergency starting conditions are the conditions in which the second service battery is not provided with sufficient charge to allow starting of the motorbike. According to the invention, said first starting means comprise a first starting switch and said second motorbike emergency starting means comprise a second emergency switch, wherein said first starting means and said second motorbike emergency starting means can be operated by an user.

In this way, as better explained below, by means of the second emergency starting means it is possible to activate the second control unit, in practice consisting of a control unit (BMS) of the first main battery, in such a way as to allow powering of the first control unit, comprising a vehicle control unit (VCU), by means of the first main battery when the second service battery is not sufficiently charged, and therefore enable starting of the vehicle.

For the purposes of the present invention, by the term *"emergency starting conditions"* it is meant conditions in which the second service battery is not provided with sufficient charge to allow starting of the vehicle.

Furthermore, with the term *"battery"* it is meant any electrical energy storage device which can be recharged and is able to supply electrical energy to a circuit connected to it.

The term *"electric vehicle"* wants to indicate any vehicle provided with at least one electric traction motor, therefore comprising vehicles with fully electric traction and vehicles with hybrid traction.

Lastly, for the purpose of the present invention, the term *"electric traction motor"* wants to indicate an *"electric motor"* which provides driving torque to a driven wheel of the motorbike. Normally said first and second switch can be operated by a user and can typically consist of an ignition key or ignition push button and an emergency starting push button respectively.

In further detail, in an embodiment according to the present invention, the device for powering and controlling the motorbike can advantageously comprise third switching means which are controlled by said second control unit of said first main battery and which are adapted to connect said first main battery to the first control unit of the motorbike and the electric traction motor; furthermore, the device for powering and controlling can advantageously comprise fourth switching means which are controlled by said first control unit of the motorbike and the electric traction motor and operatively connected to said second control unit of said first main battery and are adapted to send to said second control unit a signal for activation/deactivation of said third switching means.

In practice, the third switching means can consist of a switch (main switch), controlled by the control unit (BMS) of the main battery, which allows the power supply of the control system of the motorbike and the electric traction motor to be electrically connected to the voltage of the first main battery. In turn the fourth switching means can consist of a further switch (ignition switch) controlled by the motorbike control unit (VCU), the closing of which is detected by the BMS which consequently activates closing of the main switch.

In normal conditions, therefore, the VCU can be activated by the ignition key and determines closing of the ignition switch. The BMS detects the closing of the latter and activates the main switch, causing closure of the power supply circuit of the control system of the motorbike and the electric traction motor by means of the main battery.

In an embodiment of the device for powering and controlling an electric motorbike, according to the present invention, the second emergency starting switch is adapted to send to said second control unit of said first main battery a signal for the activation/deactivation of said third switching means.

In practice, in emergency starting conditions, the user, by means of a push button for example, operates the second emergency starting switch, causing it to close. The BMS then detects closure of the latter and activates the main switch, causing closure of the circuit powering the motorbike and motor control system by means of the main battery.

In an embodiment, said third switching means can advantageously comprise an internal switch of said first main battery, thus simplifying the circuit arrangement.

Typically said first main battery and said second service battery operate at different voltage levels and normally the first main battery operates at a higher voltage level than the second service battery. Typical operating values, for example, can be 48 V for the first main battery and 12 V for the second service battery.

In this case, said first control unit of said motorbike and said electric traction motor advantageously comprises voltage converter means interposed between said first main battery and said second service battery.

In a particularly advantageous embodiment, the first control unit of the motorbike and the electric traction motor preferably comprises first control means of the electric motor (MCU), comprising the control and power electronics of the electric traction motor, and second control means of the motorbike, comprising the motorbike control electronics.

In practice, in this embodiment, the first control means of the electric traction motor are operatively connected to the first main battery and to the electric traction motor for driving said electric traction motor.

Furthermore, the second control means (VCU) of the motorbike are operatively connected to said second service battery to start the motorbike in normal conditions and are operatively connected to said first main battery for starting the vehicle in emergency conditions. In other words, the VCU, as explained better in the following detailed description, in the starting phase in normal conditions can be advantageously powered by the second service battery, while in the starting phase in emergency conditions, it can be powered by the first main battery.

The motorbike of the present invention can advantageously consist of an electric moped. In this case, the emergency switch can be advantageously operated by a user via push-button means positioned for example in an under-saddle compartment of the moped.

Further characteristics and advantages of the present invention will become clear from the description of some embodiments, illustrated by way of non-limiting example in the attached Figures, in which:
- Figure 1 is a scheme of a general example of a device for powering and controlling an electric vehicle, according to the present invention;
- Figure 2 is a scheme of a first particular example of a device for powering and controlling an electric vehicle, according to the present invention;
- Figure 3 is a scheme of a second particular example of a device for powering and controlling an electric vehicle, according to the present invention;
- Figure 4 is a scheme of a third particular example of a device for powering and controlling an electric vehicle, according to the present invention;
- Figure 5 is a scheme of a fourth particular example of a device for powering and controlling an electric vehicle, according to the present invention;
- Figure 6 is a scheme of a fifth particular example of a device for powering and controlling an electric vehicle, according to the present invention.

With reference to the attached figures, in its more general embodiment, the device 1 of the present invention is adapted to powering and controlling an electric vehicle comprising an electric traction motor 2 and a control system 3 of the vehicle and the electric traction motor 2. The electric traction motor 2 provides driving torque to a driven wheel of the vehicle.

The device 1 comprises a first main battery 4 which is adapted to power the electric traction motor 2 and the control system 3, in addition to a second service battery 5 which is adapted to power the control system 3 during an ignition phase of the vehicle.

The device 1 further comprises first starting means 6 of the vehicle, consisting for example of a first switch 6 which can be operated by the user by means of an ignition key or ignition push button and second emergency starting means 7 of the vehicle, consisting for example of a second switch 7 that can be operated by the user by means of an emergency starting push button and positioned on an emergency circuit 71.

One of the particular characteristics of the device 1 according to the present invention is given by the fact that said control system 3 comprises a first control unit 10 of the vehicle and of the electric traction motor 2 and a second control unit 20 of the first main battery 4.

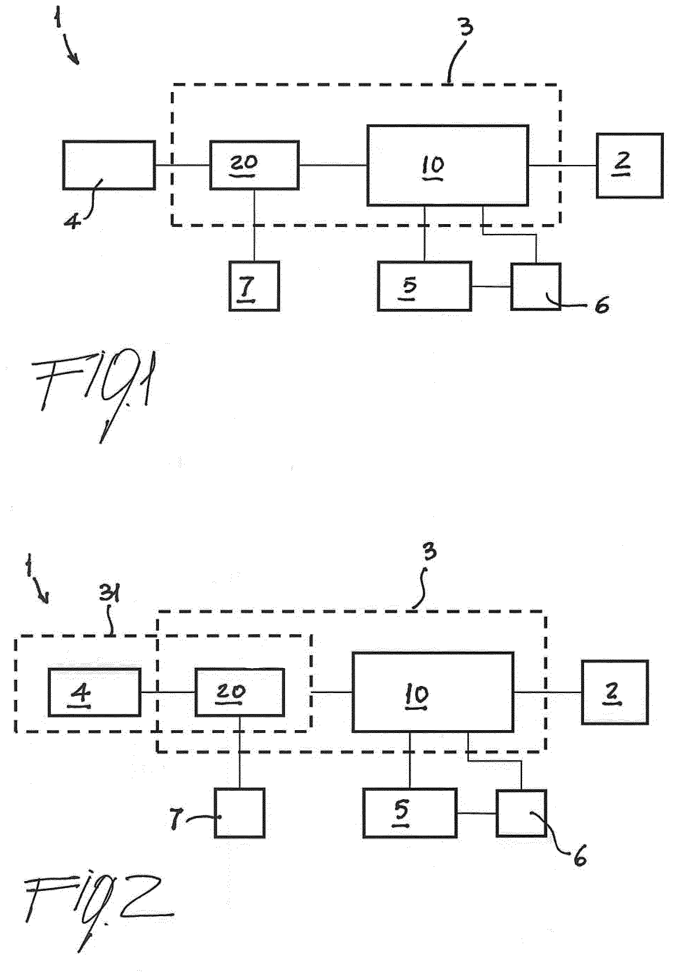

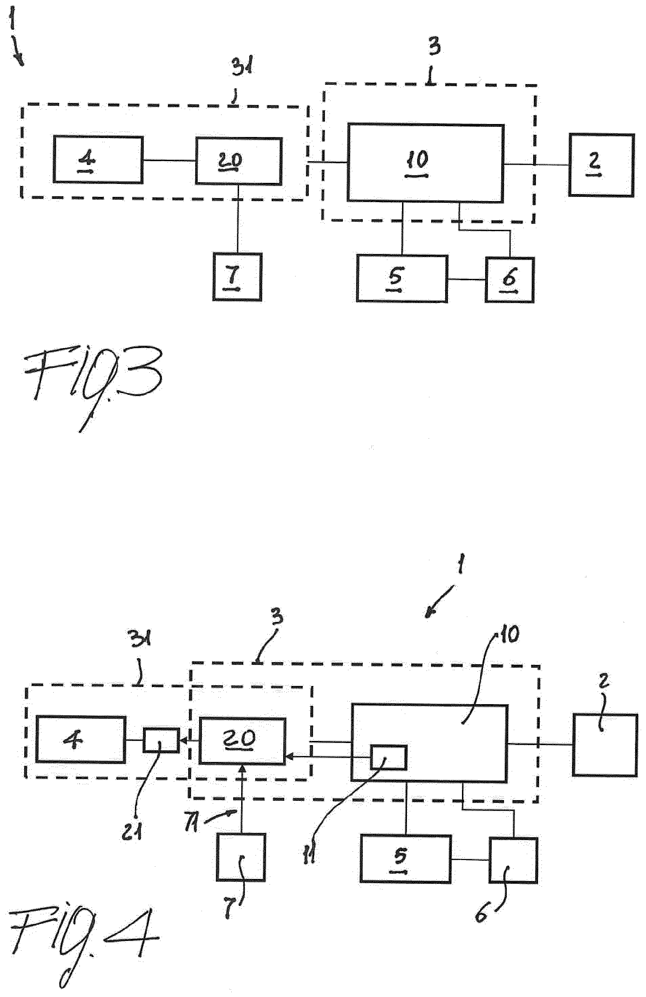

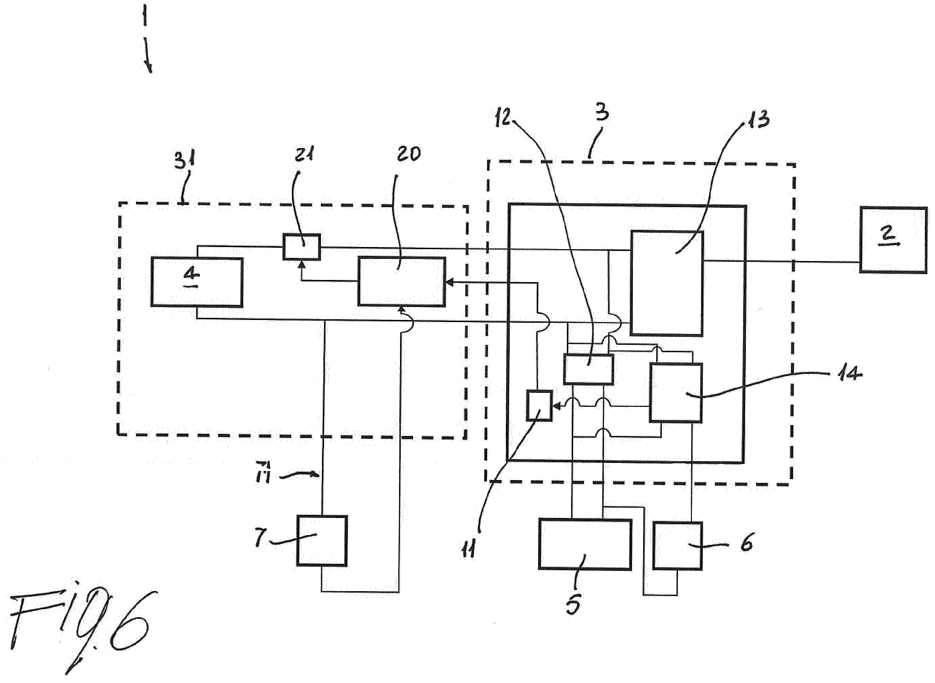

In physical terms, the first control unit 10 of the vehicle and the second control unit 20 of the first main battery 4 can be integrated in the same control system 3 (Figure 1). Alternatively, the second control unit 20 can be advantageously integrated in physical terms in a control system 31 of the first main battery 4 (Figures 2-6). In turn, the control system 3 of the vehicle and the electric traction motor 2, and the control system 31 of the first main battery 4 can be physically integrated, totally or partially (Figures 2, 4 and 5), or physically separated (Figures 3 and 6).

Another of the particular features of the device 1 according to the present invention is given by the fact that the first starting switch 6 is operatively connected to said second service battery 5 and to said first control unit 10 of the vehicle and the electric traction motor 2, in such a way that when it is closed (ignition key set to ON), the first control unit 10 is powered by means of the second service battery 5 to allow starting of the vehicle.

As better explained below, the second emergency starting switch 7 is operatively connected to the second control unit 20 in such a way to allow powering of the first control unit 10 by means of the first main battery 4 under emergency conditions, namely when the second service battery 5 does not have sufficient charge to permit starting of the vehicle.

With reference to figures 4-6, in a preferred embodiment the device 1 for powering and controlling an electric vehicle comprises third switching means 21 which are controlled by the second control unit 20 of the first main battery 4 and are adapted to connect said first main battery 4 to the first control unit 10 of the vehicle and the electric traction motor 2.

The device 1 further comprises fourth switching means 11 which are controlled by the first control unit 10 of the vehicle and the electric traction motor 2 and which are operatively connected to said second control unit 20 of said first main battery 4. As better explained below, the fourth switching means 11 are adapted to send to the second control unit 20 a signal for the activation/deactivation of said third switching means 21.

In one embodiment of the device of the present invention, the third switching means 21 consist of a switch 21 (main switch) which is controlled by the BMS 20 of the main battery 4, and allows to connect electrically the power supply of the control system 3 of the vehicle and of the electric traction motor 2 to the voltage of the first main battery 4. In turn, the fourth switching means 11 consist of a further switch 11 (ignition switch) which is controlled by the vehicle control unit (VCU) so that when its closure is detected by the BMS 20, the latter consequently activates closing of the main switch 21, thus starting the vehicle under normal conditions.

Under emergency starting conditions, on the other hand, the second emergency starting switch 7 is adapted to send to said second control unit 20 of said first main battery 4 a signal for the activation/deactivation of said third switching means 21. The user then, by means of a push button for example, acts on the second emergency starting switch 7, causing it to close. The BMS 20 then detects closing of the emergency circuit 71 and activates the main switch 21 causing closure of the powering circuit of the control system 3 of the vehicle and of the electric traction motor 2 by means of the main battery 4.

In practical terms, the main switch 21 can advantageously consist of an internal switch of said first main battery 4.

As previously mentioned, in the device 1 for powering and controlling an electric vehicle according to the invention, the main traction battery 4 and the second service battery 5 operate at different voltage levels, for example at voltages of 48 V and 12 V respectively.

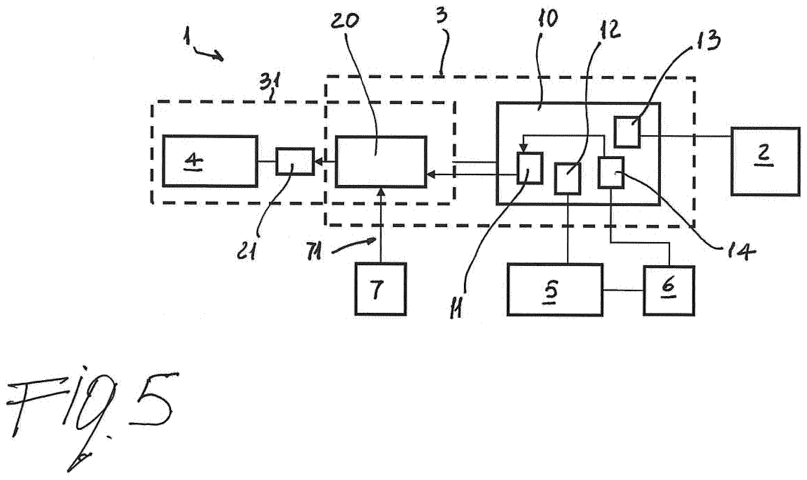

With reference to Figures 5 and 6, in an example of the device 1 of the invention, the first control unit 10 of the vehicle and the electric traction motor 2 comprises voltage converter means 12 (in practice, a DC-DC converter) which are interposed between said first main battery 4 and said second service battery 5.

In this way it is possible to produce an operative interface between the two batteries 4 and 5 thus permitting, among other things, recharging of the service battery 5 by means of the main battery 4.

Again with reference to Figures 5 and 6, in an example of the device 1 of the invention, said first control unit 10 of the vehicle and the electric traction motor 2 comprises first control means 13 of the electric motor (typically a Motor Control Unit - MCU) and second control means 14 of the vehicle (Vehicle Control Unit - VCU).

Typically, the MCU 13 of the electric traction motor 2 is operatively connected to the first main battery 4 and to said electric traction motor 2 so as to allow the driving of said electric traction motor 2.

Furthermore, the VCU 14 of the vehicle is typically operatively connected to said second service battery 5 for starting the vehicle in normal conditions and is operatively connected to said first main battery 4 to allow starting of the vehicle under emergency conditions.

In practice, during normal operation the vehicle starting procedure is the following.

The user operates the first starting means 6, for example by setting the key switch to the ON position. The VCU 14 is then powered by the service battery 5 and gives the command for closing the ignition switch 11 of the main battery 4 intended mainly for traction.

The BMS 20 detects closing of the ignition contact 11 and activates the main switch 21, connecting the power supply of the control system 3 of the vehicle and of the electric traction motor 2 to the main battery 4. Once powered, the control system 3 of the vehicle and of the electric traction motor 2 is able to maintain the charge of the service battery 5 by means of the DC-DC converter 12 and drive the electric traction motor 2 by means of the MCU 13.

If the service battery 5 is flat, it is not possible to power the VCU 14 and proceed with the standard ignition procedure; the emergency starting procedure must be employed by means of the emergency starting switch 7. The emergency starting procedure is the following.

The user operates the first starting means 6, for example by setting the key switch to the ON position. Since the service battery 5 is flat, the VCU 14 cannot be powered and cannot give the command for closing the ignition switch 11 of the main traction battery 4.

At this point the user operates the emergency starting switch 7 (for example by means of a push button) closing the emergency circuit 71. The BMS 20 detects closing of the emergency circuit 71 and activates the main switch 21 connecting the power supply of the control system 3 of the vehicle and of the electric traction motor 2 to the main battery 4.

The control system 3 of the vehicle and of the electric traction motor 2, once powered, is able to power the VCU 14 and recharge the service battery 5 by means of the DC-DC converter 12. The VCU 14 can then command closing of the ignition switch 11 of the main battery 4.

At this point the user can release the push button activating the emergency starting switch 7. At this point, the vehicle has been started and is in the normal operating mode, with the control system 3 of the vehicle and the electric traction motor 2 continuing to charge the service battery 5 by means of the DC-DC converter 12 and at the same time can begin driving the electric traction motor 2 by means of the MCU 13.

It has been seen in practice that a device for powering and controlling an electric vehicle, and in particular an electric motorcycle, according to the present invention achieves the predefined objects.

Using the powering and controlling device of the present invention, it is in fact possible to start the vehicle also when the service battery is not sufficiently charged.

Furthermore, once the vehicle has been started, the powering and controlling device of the present invention allows recharging of the service battery.

As has been seen from the previous description and attached figures, the powering and controlling device of the present invention can be produced with relatively simple circuit means.

Furthermore, if the vehicle consists of an electric traction motorcycle, the powering and controlling device of the invention can expediently comprise a push-button operation system positioned close to the main battery and housed in a protected compartment in such a way as not to be freely accessible, other than by the owner/user, for example in an under-saddle compartment of said motorcycle.

## Claims

1. An electric motorbike comprising an electric traction motor (2) and a control system (3) of the motorbike and of said electric traction motor (2), wherein said electric motorbike comprises a powering and controlling device (1) comprising:
a first main battery (4) for supplying said electric traction motor (2) and said control system (3),
a second service battery (5) which is adapted to supply said control system (3) during a starting phase of said motorbike, first motorbike starting means (6) and second motorbike emergency starting means (7), wherein said control system (3) comprises a first control unit (10) of the vehicle and of the said electric traction motor (2) and a second control unit (20) of said first main battery (4)
said first starting means (6) being operatively connected to said second service battery (5) and said first control unit (10) of the motorbike and said electric traction motor (2) to supply said first control unit (10) through said second service battery (5) under normal conditions,
said second motorbike emergency starting means (7) being operatively connected to said second control unit (20) to supply said first control unit (10) through said first main battery (4) in emergency starting conditions, wherein said emergency starting conditions are the conditions in which the second service battery is not provided with sufficient charge to allow starting of the motorbike, wherein said first motorbike starting means (6) comprise a first starting switch and said second motorbike emergency starting means (7) comprise a second emergency starting switch, wherein said first motorbike starting means and said second motorbike emergency starting means can be operated by an user.

2. Electric motorbike according to claim 1, **characterized in that** the device (1) comprises third switching means (21) controlled by said second control unit (20) of said first main battery (4) and adapted to connect said first main battery (4) to the first control unit (10) of the motorbike and of the electric traction motor (2), and fourth switching means (11) controlled by said first control unit (10) of the motorbike and of the electric traction motor (2) and operatively connected to said second control unit (20) of said first main battery (4) and adapted to send to said second control unit (20) a signal for the activation/deactivation of said third switching means (21).

3. Electric motorbike according to claim 2, **characterized in that** said second motorbike emergency starting switch (7) is adapted to send to said second control unit (20) of said first main battery (4) a signal for activating/deactivating said third switching means (21).

4. Electric motorbike (1) according to claim 2 or 3, **characterized in that** said third switching means (21) comprise an internal switch of said first main battery (4).

5. Electric motorbike, according to anyone of the previous claims, **characterized in that** said first main battery (4) and said second service battery (5) operate at different voltage levels.

6. Electric motorbike according to claim 5, **characterized in that** said first control unit (10) of the motorbike and of said electric traction motor (2) comprises voltage converter means (12) interposed between said first main battery (4) and said second service battery (5).

7. Electric motorbike according to anyone of the preceding claims, **characterized in that** said first control unit (10) of the motorbike and of the electric traction motor (2) comprises first control means (13) of said traction electric motor (2) and second control means (14) of the motorbike.

8. Electric motorbike according to claim 7, **characterized in that** said first control means (13) of said electric traction motor (2) are operatively connected to said first main battery (4) and to said electric motor (2) for driving said electric traction motor (2).

9. Electric motorbike according to claim 7 or 8, **characterized in that** said second control means (14) of the motorbike are operatively connected to said second service battery (5) for starting the motorbike under normal conditions and operationally connected to said first main battery (4) for starting the motorbike under emergency conditions.

10. Electric motorbike according to anyone of the previous claims, **characterized in that** said first starting switch (6) and said second starting switch (7) are operated by a user.

11. Electric motorbike according to anyone of the claims 2 to 10, **characterized in that** said second switch (7) can be actuated by push-button means.

12. Electric motorbike according to anyone of the claims 1-11, **characterized in that** said second emergency starting switch (7) being positioned in a under-saddle compartment of said motorbike.

## Patentansprüche

1. Elektrisches Motorrad, umfassend einen elektrischen Fahrmotor (2) und ein Steuersystem (3) des Motorrads und des elektrischen Fahrmotors (2), wobei das elektrische Motorrad eine Leistungsversorgungs- und Steuerungseinrichtung (1) umfasst, umfassend:
eine erste Hauptbatterie (4) zur Versorgung des elektrischen Fahrmotors (2) und des Steuersystems (3),
eine zweite Servicebatterie (5), die zur Versorgung des Steuersystems (3) während einer Startphase des Motorrads geeignet ist,
erste Motorradstartmittel (6) und zweite Motorradnotstartmittel (7), wobei das Steuersystem (3) eine erste Steuereinheit (10) des Fahrzeugs und des elektrischen Fahrmotors (2) und eine zweite Steuereinheit (20) der ersten Hauptbatterie (4) umfasst,
wobei die ersten Startmittel (6) funktionsfähig mit der zweiten Servicebatterie (5) und der ersten Steuereinheit (10) des Motorrads und dem elektrischen Fahrmotor (2) verbunden sind, um die erste Steuereinheit (10) unter normalen Bedingungen über die zweite Servicebatterie (5) zu versorgen,
wobei die zweiten Motorradnotstartmittel (7) funktionsfähig mit der zweiten Steuereinheit (20) verbunden sind, um die erste Steuereinheit (10) unter Notstartbedingungen über die erste Hauptbatterie (4) zu versorgen,
wobei die Notstartbedingungen die Bedingungen sind, unter denen die zweite Servicebatterie nicht mit einer ausreichenden Ladung versehen ist, um ein Starten des Motorrads zu ermöglichen,
wobei die ersten Motorradstartmittel (6) einen ersten Startschalter umfassen und die zweiten Motorradnotstartmittel (7) einen zweiten Notstartschalter umfassen, wobei die ersten Motorradstartmittel und die zweiten Motorradnotstartmittel von einem Benutzer bedient werden können.

2. Elektrisches Motorrad nach Anspruch 1, **dadurch gekennzeichnet, dass** die Einrichtung (1) dritte Schaltmittel (21) umfasst, die von der zweiten Steuereinheit (20) der ersten Hauptbatterie (4) gesteuert werden und dazu geeignet sind, die erste Hauptbatterie (4) mit der ersten Steuereinheit (10) des Motorrads und des elektrischen Fahrmotors (2) zu verbinden, und vierte Schaltmittel (11), die von der ersten Steuereinheit (10) des Motorrads und des elektrischen Fahrmotors (2) gesteuert werden und funktionsfähig mit der zweiten Steuereinheit (20) der ersten Hauptbatterie (4) verbunden sind und dazu geeignet sind, an die zweite Steuereinheit (20) ein Signal zur Aktivierung/Deaktivierung der dritten Schaltmittel (21) zu senden.

3. Elektrisches Motorrad nach Anspruch 2, **dadurch gekennzeichnet, dass** der zweite Motorradnotstartschalter (7) dazu geeignet ist, an die zweite Steuereinheit (20) der ersten Hauptbatterie (4) ein Signal zur Aktivierung/Deaktivierung der dritten Schaltmittel (21) zu senden.

4. Elektrisches Motorrad (1) nach Anspruch 2 oder 3, **dadurch gekennzeichnet, dass** die dritten Schaltmittel (21) einen internen Schalter der ersten Hauptbatterie (4) umfassen.

5. Elektrisches Motorrad nach einem der vorhergehenden Ansprüche, **dadurch gekennzeichnet, dass** die erste Hauptbatterie (4) und die zweite Servicebatterie (5) mit unterschiedlichen Spannungspegeln betrieben werden.

6. Elektrisches Motorrad nach Anspruch 5, **dadurch gekennzeichnet, dass** die erste Steuereinheit (10) des Motorrads und des elektrischen Fahrmotors (2) Spannungswandlermittel (12) umfasst, die zwischen der ersten Hauptbatterie (4) und der zweiten Servicebatterie (5) angeordnet sind.

7. Elektrisches Motorrad nach einem der vorhergehenden Ansprüche, **dadurch gekennzeichnet, dass** die erste Steuereinheit (10) des Motorrads und des elektrischen Fahrmotors (2) erste Steuermittel (13) des elektrischen Fahrmotors (2) und zweite Steuermittel (14) des Motorrads umfasst.

8. Elektrisches Motorrad nach Anspruch 7, **dadurch gekennzeichnet, dass** die ersten Steuermittel (13) des elektrischen Fahrmotors (2) funktionsfähig mit der ersten Hauptbatterie (4) und mit dem Elektromotor (2) zum Antreiben des elektrischen Fahrmotors (2) verbunden sind.

9. Elektrisches Motorrad nach Anspruch 7 oder 8, **dadurch gekennzeichnet, dass** die zweiten Steuermittel (14) des Motorrads funktionsfähig mit der zweiten Servicebatterie (5) verbunden sind, um das Motorrad unter normalen Bedingungen zu starten, und funktionsfähig mit der ersten Hauptbatterie (4) verbunden sind, um das Motorrad unter Notfallbedingungen zu starten.

10. Elektrisches Motorrad nach einem der vorhergehenden Ansprüche, **dadurch gekennzeichnet, dass** der erste Startschalter (6) und der zweite Startschalter (7) von einem Benutzer bedient werden.

11. Elektrisches Motorrad nach einem der Ansprüche 2 bis 10, **dadurch gekennzeichnet, dass** der zweite Schalter (7) durch Drucktastenmittel betätigt werden kann.

12. Elektrisches Motorrad nach einem der Ansprüche 1-11, **dadurch gekennzeichnet, dass** der zweite Notstartschalter (7) in einem Untersattelfach des Motorrads positioniert ist.

## Revendications

1. Moto électrique comprenant un moteur de traction électrique (2) et un système de commande (3) de la moto et dudit moteur de traction électrique (2), dans laquelle ladite moto électrique comprend un dispositif d'alimentation et de commande (1) comprenant :
une première batterie principale (4) pour alimenter ledit moteur de traction électrique (2) et ledit système de commande (3),
une deuxième batterie de service (5) qui est adaptée pour alimenter ledit système de commande (3) pendant une phase de démarrage de ladite moto,
des premiers moyens de démarrage moto (6) et des deuxièmes moyens de démarrage d'urgence moto (7), dans laquelle ledit système de commande (3) comprend une première unité de commande (10) du véhicule et dudit moteur de traction électrique (2) et une deuxième unité de commande (20) de ladite première batterie principale (4),
lesdits premiers moyens de démarrage (6) étant fonctionnellement reliés à ladite deuxième batterie de service (5) et à ladite première unité de commande (10) de la moto et audit moteur de traction électrique (2) pour alimenter ladite première unité de commande (10) par l'intermédiaire de ladite deuxième batterie de service (5) dans des conditions normales,
lesdits deuxièmes moyens de démarrage d'urgence moto (7) étant fonctionnellement reliés à ladite deuxième unité de commande (20) pour alimenter ladite première unité de commande (10) par l'intermédiaire de ladite première batterie principale (4) dans des conditions de démarrage d'urgence,
dans laquelle lesdites conditions de démarrage d'urgence sont les conditions dans lesquelles la deuxième batterie de service n'est pas fournie avec une charge suffisante pour permettre le démarrage de la moto,
dans laquelle lesdits premiers moyens de démarrage moto (6) comprennent un premier commutateur de démarrage et lesdits deuxièmes moyens de démarrage d'urgence moto (7) comprennent un deuxième commutateur de démarrage d'urgence, dans laquelle lesdits premiers moyens de démarrage moto et lesdits deuxièmes moyens de démarrage d'urgence moto peuvent être actionnés par un utilisateur.

2. Moto électrique selon la revendication 1, **caractérisée en ce que** le dispositif (1) comprend des troisièmes moyens de commutation (21) commandés par ladite deuxième unité de commande (20) de ladite première batterie principale (4) et adaptés pour relier ladite première batterie principale (4) à la première unité de commande (10) de la moto et du moteur de traction électrique (2), et des quatrièmes moyens de commutation (11) commandés par ladite première unité de commande (10) de la moto et du moteur de traction électrique (2) et reliés fonctionnellement à ladite deuxième unité de commande (20) de ladite première batterie principale (4) et adaptés pour envoyer à ladite deuxième unité de commande (20) un signal pour l'activation/désactivation desdits troisièmes moyens de commutation (21).

3. Moto électrique selon la revendication 2, **caractérisée en ce que** ledit deuxième commutateur de démarrage d'urgence moto (7) est adapté pour envoyer à ladite deuxième unité de commande (20) de ladite première batterie principale (4) un signal pour activer/désactiver lesdits troisièmes moyens de commutation (21).

4. Moto électrique (1) selon la revendication 2 ou 3, **caractérisée en ce que** lesdits troisièmes moyens de commutation (21) comprennent un commutateur interne de ladite première batterie principale (4).

5. Moto électrique, selon l'une quelconque des revendications précédentes, **caractérisée en ce que** ladite première batterie principale (4) et ladite deuxième batterie de service (5) fonctionnent à des niveaux de tension différents.

6. Moto électrique selon la revendication 5, **caractérisée en ce que** ladite première unité de commande (10) de la moto et dudit moteur de traction électrique (2) comprend des moyens de conversion de tension (12) interposés entre ladite première batterie principale (4) et ladite deuxième batterie de service (5).

7. Moto électrique selon l'une quelconque des revendications précédentes, **caractérisée en ce que** ladite première unité de commande (10) de la moto et du moteur de traction électrique (2) comprend des premiers moyens de commande (13) dudit moteur électrique de traction (2) et des deuxièmes moyens de commande (14) de la moto.

8. Moto électrique selon la revendication 7, **caractérisée en ce que** lesdits premiers moyens de commande (13) dudit moteur de traction électrique (2) sont fonctionnellement reliés à ladite première batterie principale (4) et audit moteur électrique (2) pour entraîner ledit moteur de traction électrique (2).

9. Moto électrique selon la revendication 7 ou 8, **caractérisée en ce que** lesdits deuxièmes moyens de commande (14) de la moto sont fonctionnellement reliés à ladite deuxième batterie de service (5) pour démarrer la moto dans des conditions normales et fonctionnellement reliés à ladite première batterie principale (4) pour démarrer la moto dans des conditions d'urgence.

10. Moto électrique selon l'une quelconque des revendications précédentes, **caractérisée en ce que** ledit premier commutateur de démarrage (6) et ledit deuxième commutateur de démarrage (7) sont actionnés par un utilisateur.

11. Moto électrique selon l'une quelconque des revendications 2 à 10, **caractérisée en ce que** ledit deuxième commutateur (7) peut être actionné par des moyens à bouton-poussoir.

12. Moto électrique selon l'une quelconque des revendications 1 à 11, **caractérisée en ce que** ledit deuxième commutateur de démarrage d'urgence (7) est positionné dans un compartiment sous la selle de ladite moto.
